Europäisches Patentamt

European Patent Office

Office européen des brevets

(19)

(11) Veröffentlichungsnummer: **0 272 246**
**A2**

(12) # EUROPÄISCHE PATENTANMELDUNG

(21) Anmeldenummer: 87890288.1

(22) Anmeldetag: 15.12.87

(51) Int. Cl.⁴ **F16N 13/10**

(30) Priorität: 17.12.86 AT 3353/86

(43) Veröffentlichungstag der Anmeldung:
22.06.88 Patentblatt 88/25

(84) Benannte Vertragsstaaten:
DE ES FR GB IT NL SE

(71) Anmelder: **Steyr-Daimler-Puch**
**Aktiengesellschaft**
**Kärntnerring 7**
**A-1010 Wien(AT)**

(72) Erfinder: **Leitner, Max**
**Madlsederstrasse 11**
**A-4400 Steyr(AT)**

(54) **Pumpe, insbesondere Schmierölpumpe.**

(57) Eine Pumpe, insbesondere Schmierölpumpe,
dient zur Flüssigkeitsförderung in einen Hohlraum
(2) eines Rotors (1). Um mit einfachen, technischen
Mitteln eine unmittelbare Flüssigkeitsförderung in
den Rotorhohlraum (2) zu gewährleisten, weist der
Rotor (1) eine quer zu seiner Achse gerichtete Bohrung (3) auf. In der Bohrung (3) ist ein verschiebbarer Kolben (6) gelagert. Der Rotor (1) wird
im Bohrungsbereich von einem mit der
Förderflüssigkeit gefüllten Führungskörper (4) umschlossen, an dessen Führungsfläche (5) der Kolben
(6) unter Flieh-und/oderFederkraftswirkung dauernd
angedrückt wird. Dabei besitzt die Führungsfläche
(5) des Führungskörpers (4) unterschiedliche Radialabstände von der Rotorachse. Von der dem an der
Führungsfläche (5) gleitenden Kolbenende abgekehrten Seite her führte eine Verbindungsleitung (8,
9, 10) durch den Rotor (1) und den Kolben (6) in den
Hohlraum (2). In dieser Verbindungsleitung (8, 9,
10) sind zwei entgegengesetzt wirkende Rückschlagventile (11, 12) eingebaut.

FIG.1

Die Erfindung betrifft eine Pumpe, insbesondere Schmierölpumpe, zur Flüssigkeitsförderung in einen Hohlraum eines Rotors.

Die Schmierölförderung in den Hohlraum eines Rotors ist vor allem dann erforderlich, wenn es darum geht, die Lager einer den Rotor bildenden Welle bzw. die Lager von auf der Welle frei drehbaren Losrädern eines Getriebes oder ähnlicher Drehteile mit Schmieröl zu vorsorgen, wobei in der Regel als Hohlraum eine Axialbohrung in der den Rotor bildenden Welle dient, von welcher Bohrung dann Radialbohrungen zu den einzelnen Lagerstellen führen. Selbstverständlich wären aber auch andere Anwendungsfälle möglich. Bisher werden für diese Zwecke außerhalb des Rotors bzw. der Welle angeordnete Pumpen, insbesondere Zahnradpumpen, verwendet, wobei für die Zuführung des Schmieröls von der Pumpendruckseite in den Rotor vor allem dann Schwierigkeiten bestehen, wenn der Rotor bzw. die Welle stirnseitig verbaut ist und wenn daher das Schmieröl gegen die Fliehkraft radial in den Hohlraum bzw. die Wellenbohrung eingeleitet werden muß.

Der Erfindung liegt somit die Aufgabe zugrunde, diese Mängel zu beseitigen und eine Pumpe zu schaffen, bei der mit verhältnismäßig einfachen Mitteln und mit wesentlicher Verringerung des technischen Aufwandes und des Raumbedarfes eine unmittelbare Flüssigkeitsförderung in den Rotorhohlraum gewährleistet ist.

Die Erfindung löst die gestellte Aufgabe dadurch, daß der Rotor eine quer zu seiner Achse gerichtete Bohrung mit einem darin verschiebbaren Kolben aufweist und im Bohrungsbereich von einem mit der Förderflüssigkeit gefüllten Führungskörper für den an diesen durch Flieh- und/oder Federkraft angedrückten Kolben umschlossen ist, wobei die Führungsfläche des Führungskörpers unterschiedliche Radialabstände von der Rotorachse besitzt und von der dem an der Führungsfläche gleitenden Kolbenende abgekehrten Seite her eine Verbindungsleitung mit zwei entgegengesetzt wirkenden Rückschlagventilen durch den Rotor und den Kolben in den Hohlraum führt.

Da also der Rotor von einem Führungskörper umschlossen ist, dessen Führungsfläche unterschiedliche Radialabstände von der Rotorachse besitzt, wird der in der Querbohrung des Rotors gelagerte und dauernd gegen die Führungsfläche gedrückte Kolben bei der Rotordrehung in der Querbohrung hin-und hergeschoben, so daß diese Bewegung wie die Bewegung eines üblichen Pumpenkolbens zur Flüssigkeits-bzw. Ölförderung ausgenützt werden kann. Die beiden Rückschlagventile haben dabei die Aufgabe, einerseits das Ansaugen aus dem Führungskörper, andererseits die Weitergabe der angesaugten Flüssigkeit in den Hohlraum ohne Rückfluß bei der entgegengesetzten Kolbenbewegung zu ermöglichen. Dabei wird außerhalb des Rotors bzw. der Welle lediglich der undrehbare Führungskörper benötigt, wogegen sich der bewegte Pumpenkolben im Rotor bzw. in der Welle selbst befindet und der Ausstoß der zunächst angesaugten und damit geförderten Flüssigkeit unmittelbar in den Hohlraum bzw. in die Wellenbohrung erfolgt. Es ergibt sich daher eine wesentliche Verringerung des technischen Aufwandes, aber auch des Raumbedarfs. Das eine Rückschlagventil, nämlich das Saugventil, braucht nicht unbedingt innerhalb des Rotors angeordnet zu werden, sondern kann auch an der Stelle des Flüssigkeitseintritts in den Führungskörper liegen, soferne der Führungskörper im übrigen abgeschlossen ist. Wird dagegen das betreffende Ventil im Rotor vorgesehen, so kann der Führungskörper offen sein und beispielsweise im Schmierölsumpf eines Getriebes od. dgl. liegen.

In weiterer Ausbildung der Erfindung ist der Schwerpunkt des Kolbens zu dem an der Führungsfläche des Führungskörpers gleitenden Kolbenende hin verlagert. Dadurch wird erreicht, daß der Kolben bei entsprechender Drehzahl lediglich durch die Fliehkraft gegen die Führungsfläche des Führungskörpers gedrückt wird und sich somit eine eigene auf den Kolben wirkende Feder erübrigt. Auch die beiden Rückschlagventile können, z.B. als Kugelventile, so ausgebildet bzw. angeordnet werden, daß ihr Ventilkörper lediglich durch die Fliehkraft gegen seinen Sitz gedrückt wird.

In der Zeichnung ist der Erfindungsgegenstand in einem Ausführungsbeispiel dargestellt, und zwar zeigen

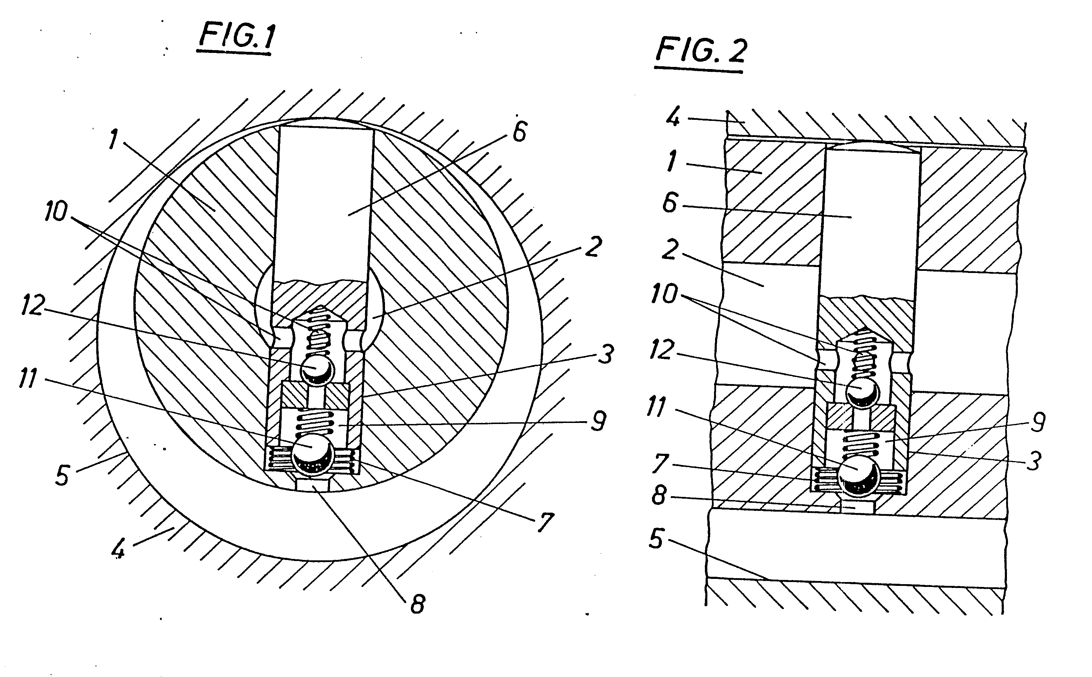

Fig. 1 eine Schmierölpumpe im Querschnitt durch die den Rotor bildende Welle und

Fig. 2 im zugehörigen Axialschnitt,

Eine den Rotor bildende Welle 1 eines Getriebes od. dgl. ist mit einem Hohlraum, nämlich einer Axialbohrung 2, zur Schmierölversorgung von Lagerstellen versehen. Die Welle 1 weist eine quer zu ihrer Achse gerichtete Bohrung 3 auf und ist im Bohrungsbereich von einem Führungskörper 4 umschlossen, dessen zylindrische Führungsbahn 5 in bezug auf die Achse der Welle 1 exzentrisch angeordnet ist, so daß die Führungsfläche 5 unterschiedliche Radialabstände von der Wellenachse besitzt. Die Führungsfläche braucht allerdings nicht kreiszylindrisch zu sein, sie könnte auch bei koaxialer Anordnung zur Welle 1 Vertiefungen und Erhöhungen aufweisen. In der Querbohrung 3 ist ein Kolben 6 verschiebbar gelagert, der durch Fliehkraft bzw. durch die Kraft einer Feder 7 an die Führungsfläche 5 des Führungskörpers 4 dauernd angedrückt und zufolge der Exzentrizität dieser Führungsfläche 5 dabei in der Querbohrung 3 hin- und hergeschoben wird.

Der Raum zwischen der Welle 1 und dem Führungskörper 4 ist beispielsweise dadurch mit Schmieröl gefüllt, daß sich der Führungskörper 4 im Ölsumpf eines Getriebes od. dgl. befindet. Der von der Bohrung 2 gebildete Wellenhohlraum ist durch Leitungsbohrungen 8, 9, 10 mit dem Raum innerhalb des Führungskörpers 5 verbunden, wobei diese Verbindungsleitung 8, 9, 10 mit zwei von federbelasteten Kugeln gebildeten Rückschlagventilen 11, 12 versehen ist. Schiebt sich der Kolben 6 aus der Bohrung 3 heraus, wirkt das Ventil 11 als Saugventil, d.h. es wird Schmieröl aus dem Raum innerhalb des Führungskörpers 4 in die Leitungsbohrung 9 angesaugt. Bei der gegenläufigen Kolbenbewegung schließt dagegen die Ventilkugel 11 und es öffnet die als Druckventil dienende Ventilkugel 12.

## Ansprüche

1. Pumpe, insbesondere Schmierölpumpe, zur Flüssigkeitsförderung in einen Hohlraum eines Rotors, dadurch gekennzeichnet, daß der Rotor (1) eine quer zu seiner Achse gerichtete Bohrung (3) mit einem darin verschiebbaren Kolben (6) aufweist und im Bohrungsbereich von einem mit Förderflüssigkeit gefüllten Führungskörper (4) für den an diesen durch Flieh-und/oder Federkraft (7) angedrückten Kolben (6) umschlossen ist, wobei die Führungsfläche (5) des Führungskörpers (4) unterschiedliche Radialabstände von der Rotorachse besitzt und von der dem an der Führungsfläche (5) gleitenden Kolbenende abgekehrten Seite her eine Verbindungsleitung (8, 9, 10) mit zwei entgegengesetzt wirkenden Rückschlagventilen (11, 12) durch den Rotor (1) und den Kolben (6) in den Hohlraum (2) führt.

2. Pumpe nach Anspruch 1, dadurch gekennzeichnet, daß der Schwerpunkt des Kolbens (6) zu dem an der Führungsfläche (5) des Führungskörpers (4) gleitenden Kolbenende hin verlagert ist.

FIG.1

FIG. 2

0 272 246